# EUROPÄISCHE PATENTSCHRIFT

(11) **EP 4 490 022 B1**
(45) Veröffentlichungstag und Bekanntmachung des Hinweises auf die Patenterteilung: **11.02.2026**
(21) Anmeldenummer: 23721272.5
(22) Anmeldetag: 02.03.2023
(51) Int. Cl.: B62J 9/16, B62J 9/14, B62J 43/28

(54) **ROLLERARTIGES FAHRZEUG MIT OPTIMIERTEM LADERAUM**
SCOOTER-TYPE VEHICLE WITH OPTIMISED LOADING SPACE
VÉHICULE DE TYPE SCOOTER À ESPACE DE CHARGEMENT OPTIMISÉ

(30) Priorität: 11.03.2022 DE 102022000846
(43) Veröffentlichungstag der Anmeldung: 15.01.2025
(73) Patentinhaber: Constin GmbH, 12159 Berlin (DE)
(72) Erfinder: CONSTIEN, Hans-Peter, 12159 Berlin (DE)
(74) Vertreter: Kayser, Christoph
(86) Internationale Anmeldenummer: PCT/DE2023/100168
(87) Internationale Veröffentlichungsnummer: WO 2023/169627

(56) Entgegenhaltungen:
- EP-A1- 1 555 431
- WO-A1-2021/150108
- DE-B4- 102015 001 959

## Beschreibung

Die vorliegende Erfindung betrifft ein Fahrzeug auf der Grundlage eines ein rollerartiges Fahrzeug betreffenden Fahrzeugkonzepts mit oder ohne Spurweite, mit einer Fahrzeuglängsachse, einem Fahrzeugrahmen, einem Fußraum, der für Füße und Beine zugänglich ist, und einem Stauraum zum Verstauen von Waren unter einer Sitzeinrichtung, wobei der Fußraum eine Nutzfläche aufweist, wobei sich die Nutzfläche unter die Sitzeinrichtung erstreckt und den Stauraum unter der Sitzeinrichtung bodenseitig begrenzt.

Solche Fahrzeuge sind mit Verbrennungsmotoren oder mit elektrischen Antrieben versehen. Für den Transport von Waren sind solche, in der Regel einspurigen Fahrzeuge, nur eingeschränkt geeignet. Verwendet werden hierfür Gepäcktaschen, die hinten mittig oder hinten links und rechts angebracht werden, sowie Tankrucksäcke bei Motorrädern. Ware wird auch bei Motorrollern zwischen den Beinen im Fußraum transportiert.

Stauraum für Waren gibt es auch unter dem Sitz oder der Sitzbank. Der Stauraum dort ist zugänglich, indem die Sitzbank aufgeklappt wird. Das Sitzbankfach wird häufig zur Verwahrung des Helms verwendet. Das Sitzbankfach ist in der Regel abschließbar, sodass dort auch Wertgegenstände sicher verwahrt werden können. Bei elektrischen Motorrollern werden im Sitzbankfach häufig Akkus untergebracht, was den Nachteil hat, dass der Raum für den Helm nicht mehr verfügbar ist. Bei Motorrollern, bei denen der Akku im Fußraum verstaut ist, bleibt das Sitzbankfach frei. Das Volumen wird aber bei solchen Lösungen auch oft dadurch eingeschränkt, dass ein Teil der Motorelektronik, häufig der Motorcontroller, dort verbaut ist.

Elektrische Motorroller und ähnliche Fahrzeuge werden zunehmend beliebter, weil sie im Vergleich zu Autos sehr wenig wiegen und deswegen wenig Energie verbrauchen. Solche Fahrzeuge sind im Hinblick auf Nachhaltigkeit und Verkehrswende sinnvoll. Ein großer Nachteil ist, dass nur wenig Last sicher damit transportiert werden kann und dass bei bestimmten Ausführungsformen kein abschließbares Sitzbankfach vorgesehen ist.

Ein Fahrzeug des nächstliegenden Standes der Technik ist aus DE102015001959 bekannt. Bei diesem Fahrzeug ist unterhalb eines Fußraums und somit unterhalb einer den Fußraum bodenseitig begrenzenden Nutzfläche ein Batterieraum ausgebildet, bei dem die zum Betrieb des Fahrzeugs erforderlichen Batterien angeordnet sind. Dieser Batterieraum erstreckt sich auch in einen Bereich unter eine Sitzeinrichtung. Die Batterien können zwar zum Austausch entnommen werden, wenn die Nutzfläche und die Sitzeinrichtung entfernt werden, diese sind aber für den Betrieb des Fahrzeugs zwingend erforderlich und dort zumindest während des Fahrbetriebs dauerhaft angeordnet. Der Batterieraum ist kein Stauraum für wahlfrei auf dem Fahrzeug mitzunehmende Waren. Ein Stauraum befindet sich ausschließlich unter einer schwenkbaren Sitzbank und ist nur über diese zugänglich. Der Fußraum mit einer dort vorhandenen Nutzfläche ist mit dem Stauraum nicht verbunden, so dass beide Räume separat und von einer anderen Richtung aus beladen und entladen werden müssen.

Aus WO2021/150108 A1 ist ein Fahrzeug bekannt, das einen U-förmig gebogene Nutzfläche im Fußraum aufweist. Einen Laderaum ist nur unterhalb einer schwenkbaren Sitzbank ausgebildet und über diese zugänglich. Dort befindet sich auch ein Zugang zu einem Batteriefach zur Aufnahme von Batterien, die für den Betrieb des Fahrzeugs erforderlich sind. Das Batteriefach erstreckt sich schräg nach vorne unter die Nutzfläche des Fußraums.

Aus EP1555431 A1 ist ein Fahrzeug bekannt, das bei dem ein Fußraum und ein Laderaum räumlich getrennt angeordnet sind. Der Laderaum ist nur von oben über eine schwenkbare Sitzbank erreichbar.

Ein solches Fahrzeug des bekannten Standes der Technik ist zum Beispiel jeweils aus JP 2552203B2, JP 3160932B2 und WO 2009/132768A1 bekannt. Die aus diesem Stand der Technik bekannten Zweiräder weisen eine abschließbare Sitzbank auf, unter der ein oder zwei Helme verstaut werden können. Zu diesem Zweck ist unter dem eigentlichen Sitz ein Stauraum ausgebildet, der von oben zugänglich ist, wenn die Sitzbank aufgeklappt wird. In einen solchen Stauraum sind andere Waren mit größeren Abmessungen als die an den Stauraum im Wesentlichen angepassten Helme nicht verstaubar. So lassen sich zum Beispiel keine Getränkekiste in diesen bekannten Stauräumen verstauen.

Die Aufgabe der vorliegenden Erfindung ist daher, ein Fahrzeug der eingangs genannten Gattung derart weiterzubilden, dass mit diesem neben dem Transport von Personen in der zugelassenen Personenzahl auch ein Warentransport größerer Waren als im Stand der Technik sicher möglich ist.

Die Aufgabe wird erfindungsgemäß dadurch gelöst, dass der Fußraum mit dem Stauraum über eine Öffnung verbunden ist, die ein vorbestimmtes Öffnungsprofil aufweist, derart, dass Ware von vorne im Stauraum verstaut werden kann, welche die gesamte Länge zwischen einer vorderen, einer einen Lenkkopf des Fahrzeugs anbindenden Geometrie des Fahrzeugrahmens und einer Abdeckung des Hinterrades einnehmen kann.

Ein Vorteil der vorliegenden Erfindung ist, dass sich durch die Öffnung zwischen Fußraum und Stauraum die Nutzfläche deutlich vergrößert und nicht nur auf wenigstens einen Teil des Fußraumes beschränkt ist. Dadurch können sowohl längere Gegenstände im Wesentlichen parallel zur Längsachse oder aber auch mehrere größere Gegenstände in Längsrichtung hintereinander transportiert werden. Besonders günstig ist dabei, das vorbestimmte Öffnungsprofil. Eine Öffnungsweite kann dadurch in gewissem Umfang an den Umfang von zu transportierender Ware angepasst werden.

Ein weiterer Vorteil der vorliegenden Erfindung ist, dass die Öffnung mit einem Flächenelement wenigstens teilweise verschließbar ist. Dadurch kann auch Ware nur in dem Stauraum aufgenommen werden und darin verschlossen werden, so dass diese dort sicher aufgehoben ist. Ebenso kann die Öffnung nur teilweise verschlossen werden, um sich dadurch in ihrem Profil an eine vom Fußraum zum Stauraum durchgeladene Ware bzw. deren Umriss anzupassen. Dadurch wird dann die Ware in ihrer Lage etwas fixiert.

Aus diesem Grund ist es ist ebenfalls von Vorteil, das Flächenelement an dem Fahrgestell oder der Sitzeinrichtung zwischen einer Öffnungsstellung und einer Schließstellung in beiden Richtungen verschiebbar angebracht ist. Durch die Verschiebbarkeit des Flächenelements kann das Öffnungsprofil zum Beispiel auch stufenlos verändert werden.

Es ist auch ein Vorteil der vorliegenden Erfindung, dass das Öffnungsprofil der Öffnung eine Höhe von 200mm bis 500mm aufweist, eine Breite von 200mm bis 500mm aufweist und/oder die Nutzfläche in Richtung der Längsachse eine Länge von 600mm bis 1000mm aufweist. Diese Abmessungen entsprechen im Wesentlichen dem zweifachen Wert der genormten Größen der gängigsten Getränkekisten. Mit diesen Abmessungen kann das Fahrzeug gemäß vorliegender Erfindung zwei Getränkekisten in Längsrichtung hintereinander laden, wobei dann eine erste Kiste auf der Nutzfläche im Fußraum steht und eine zweite Kiste auf der Nutzfläche im Stauraum steht.

Weitere Vorteile der vorliegenden Erfindung ergeben sich aus den weiteren Merkmalen der weiteren Ansprüche.

Ein Ausführungsformen der vorliegenden Erfindung werden im Folgenden anhand der Zeichnung näher beschrieben. Es zeigen:
Fig. 1 eine schematische Seitenansicht eines Fahrzeugs gemäß vorliegender Erfindung gemäß einer ersten Ausführungsform, mit einem Flächenelement in Schließstellung, das eine Öffnung unter einer geschlossenen Sitzeinrichtung verschließt;
Fig. 2 eine schematische Draufsicht auf das Fahrzeug aus Fig. 1;
Fig. 3 eine schematische Seitenansicht des Fahrzeugs aus Fig. 1, mit dem Flächenelement in Öffnungsstellung;
Fig. 4 eine schematische perspektivisch Teilansicht des Fahrzeugs aus Fig. 1 mit dem Flächenelement in Öffnungsstellung;
Fig. 5 eine schematische Seitenansicht des Fahrzeugs aus Fig. 1 in einer Variante, in der das Flächenelement an einer Sitzbank angelenkt und eingeklappt ist und sich die Sitzbank in Öffnungsstellung befindet;
Fig. 6 eine schematische Seitenansicht des Fahrzeugs aus Fig. 5 mit dem Flächenelement in einer ausgeklappten Stellung und der Sitzeinrichtung in Öffnungsstellung;

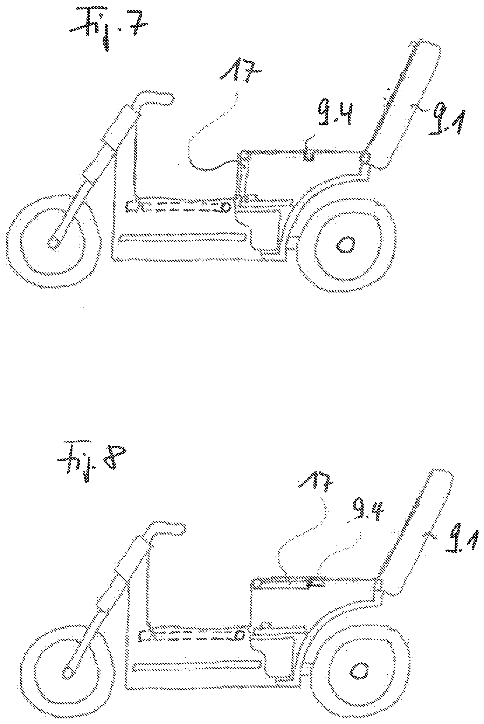

Fig. 7 eine schematische Seitenansicht des Fahrzeugs aus Fig. 5 oder 6 in einer Variante, in der das Flächenelement unabhängig von der Sitzbank an der Sitzeinrichtung angelenkt ist und sich in der Schließstellung befindet;
Fig. 8 eine schematische Seitenansicht des Fahrzeugs aus Fig. 7, wobei sich das Flächenelement in der Öffnungsstellung befindet;
Fig. 9 eine schematische Seitenansicht des Fahrzeugs aus Fig. 1 in einer zweiten Ausführungsform mit nach vorne erweitertem Stauraum.

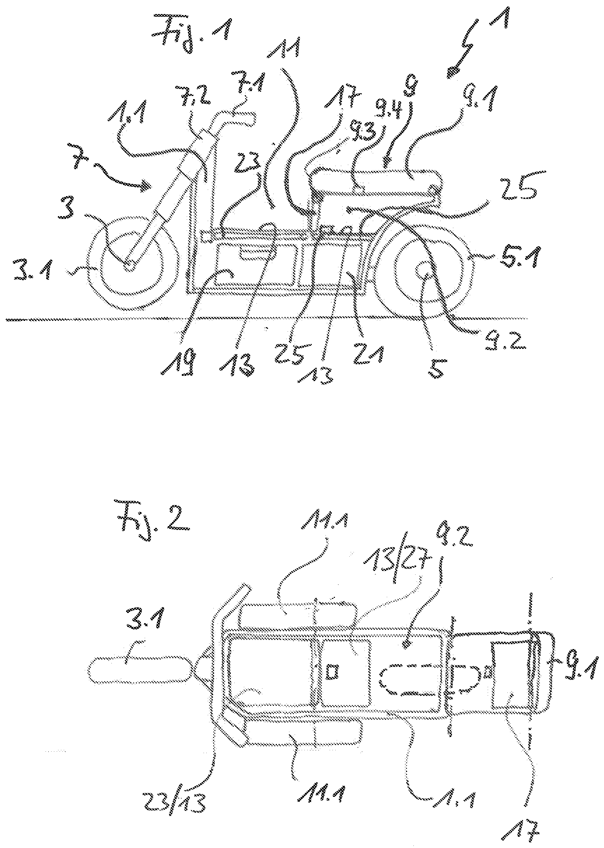

Fig. 1 zeigt eine schematische Ansicht eines Fahrzeugs 1 auf der Grundlage eines ein rollerartiges Fahrzeug betreffenden Fahrzeugkonzepts. Mit den Begriffen "rollerartiges Fahrzeug" und "Fahrzeugkonzept" ist im Kontext der vorliegenden Erfindung gemeint, dass für einspurige Zweiräder, zum Beispiel Motorroller, entwickelte Fahrzeugkonzepte auch auf dreirädrige Fahrzeuge, zum Beispiel Trikes, anwendbar sind. Diese weisen zum Beispiel vorne oder (in der Regel) hinten zwei Spuren auf. Ebenso umfassen solche Fahrzeugkonzepte auch bestimmte vierrädrige Fahrzeuge, zum Beispiel Quads.

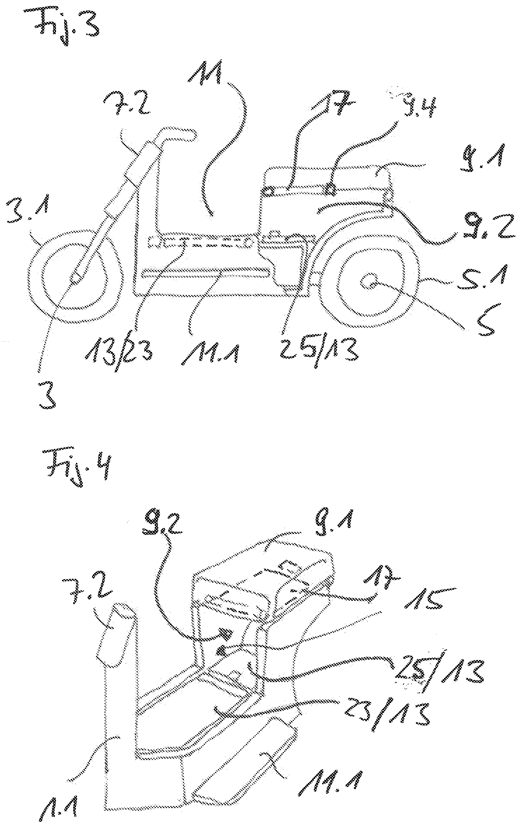

In Fig. 1 und Fig. 3 ist beispielhaft ein Motorroller mit Elektroantrieb als Fahrtzeug 1 dargestellt. Für die vorliegende Erfindung kommt es auf den Antrieb bzw. die Antriebsart nicht an. Die Erfindung ist unabhängig von dem Antrieb bzw. der Antriebsart auf die Optimierung des für den sicheren Transport von Waren verfügbaren Raum gerichtet.

Das Fahrzeug 1 umfasst einen Fahrzeugrahmen 1.1 und eine Vorderachse 3 mit einem Vorderrad 3.1 und eine Hinterachse 5 mit einem Hinterrad 5.1. Mit der Vorderachse 3 ist eine Lenkeinrichtung 7 mit einem Lenker 7.1 und einem Lenkkopf 7.2 verbunden. Der Fahrzeugrahmen 1.1 erstreckt sich räumlich zwischen der Vorderachse 3 und der Hinterachse 5. Für die Bauweise des Fahrzeugrahmens 1.1 und die Anbindung desselben an die Vorderachse 3, zum Beispiel über die Lenkeinrichtung 7, und die Anbindung an die Hinterachse 5 sind zahlreiche Konzepte bekannt, die der Fachmann auch mit dieser Erfindung umsetzen kann. Diese sind daher nicht Teil der vorliegenden Erfindung.

Das Fahrzeug 1 weist eine Fahrzeuglängsachse auf und umfasst eine Sitzeinrichtung 9, die in der in Fig. 1 dargestellten Ausführungsform eine Sitzbank 9.1 in Richtung der Fahrzeuglängsachse aufweist, derart, dass zwei Personen hintereinander Platz nehmen können. In anderen Ausführungsformen kann die Sitzeinrichtung 9 auch einen oder mehrere Einzelsitze umfassen.

Zwischen der Sitzeinrichtung 9 und der Lenkeinrichtung 7 bildet der Fahrzeugrahmen 1.1 einen Fußraum 11. Mit dem Begriff "Fußraum" ist im Rahmen der vorliegenden Erfindung ein Raum gemeint, der in dem sich Füße und Beine einer Person hindurchbewegen können und sollen, zum Beispiel beim Aufsteigen oder Einsteigen in das Fahrzeug 1. Die Füße können aber müssen nicht zwangsweise in dem Fußraum 11 abgestellt werden.

In Fig. 2 ist schematisch eine Draufsicht auf das Fahrzeug 1 dargestellt. Neben dem Fußraum 11 sind an beiden Seiten der Fahrzeuglängsachse jeweils ein Trittbrett 11.1 ausgebildet, auf denen jeweils der linke bzw. rechte Fuß ein oder mehrerer Personen abgestellt werden können.

In Fig. 4 ist ein Teil des Fahrzeugs 1 schematisch dargestellt. Der Fußraum 11 weist eine Nutzfläche 13 auf, die in der dargestellten Ausführungsform eben oder flach ausgebildet ist. In anderen Ausführungsformen kann die Nutzfläche 13 aber auch eine Oberflächenstruktur oder auch Oberflächenprofil aufweisen, das zum Beispiel eine Stufe oder dergleichen quer zur Fahrzeuglängsachse umfassen kann.

In der in Fig. 1, Fig. 2, Fig. 3 und Fig. 4 dargestellten Ausführungsform ist unterhalb der Sitzeinrichtung 9 ein Stauraum 9.2 ausgebildet. Der Stauraum 9.2 ist nach oben durch die Sitzbank 9.1 begrenzt. Die Sitzbank 9.1 ist in der dargestellten Ausführungsform schwenkbar am Fahrzeugrahmen 1.1 oder der Sitzeinrichtung 9 angeordnet. In anderen Ausführungsformen kann die Sitzbank 9.1 auch fest mit der Sitzeinrichtung 9 oder dem Fahrzeugrahmen 1.1 fest verbunden sein.

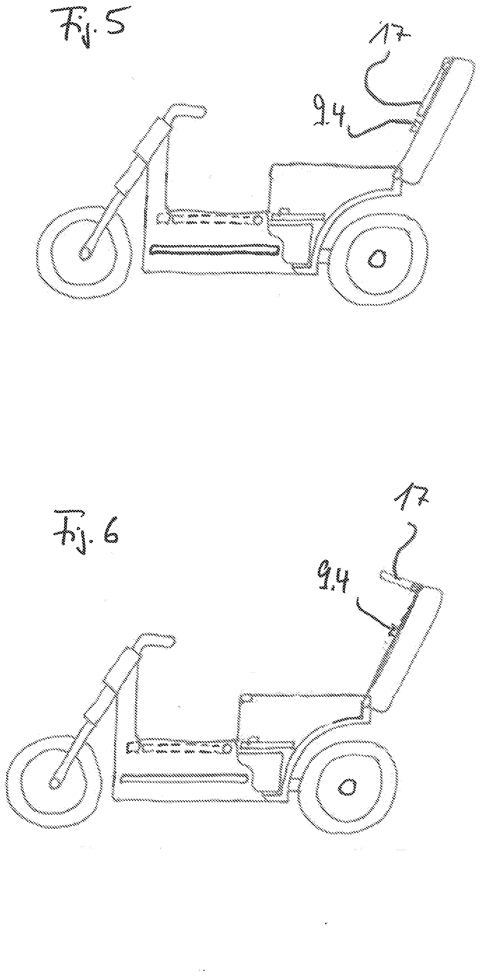

In Fig. 5 ist die Sitzbank 9.1 in einer geöffneten Stellung dargestellt, in der diese um eine quer zur Fahrzeuglängsachse verlaufende Schwenkachse nach hinten hochgeschwenkt worden ist. In anderen Ausführungsformen kann die Sitzbank 9.1 auch um eine Achse parallel zur Fahrzeuglängsachse verschwenkt werden. In wiederum anderen Ausführungsformen kann die Sitzbank 9.1 auch verschiebbar oder alternativ oder ergänzend zur Schwenkbarkeit oder Verschiebbarkeit auch vollständig abnehmbar sein.

In Fig. 4 ist zudem dargestellt, dass der Stauraum 9.2 unter der Sitzbank 9.1 vom Fußraum 11 aus zugänglich ist. Zu diesem Zweck weist die Sitzeinrichtung 9 unterhalb der Sitzbank 9.1 eine Öffnung 15 auf. In der vorliegenden Ausführungsform erstreckt sich die Nutzfläche 13 des Fußraums 11 durch die Öffnung 15 hindurch in den Stauraum 9.2 hinein. In der dargestellten Ausführungsform ist, wie bereits gesagt, die Nutzfläche durchgehend flach oder eben. In anderen Ausführungsformen kann die Nutzfläche 13 im Bereich der Öffnung 15, also am Übergang von Fußraum 11 und Stauraum 9.2 eine Schulter, Schwelle oder Kante aufweisen, derart, dass die Nutzfläche 13 in dem Stauraum höher oder tiefer in Bezug zu einer horizontalen Lage des Fahrzeugs 1 liegt. Die Nutzfläche 13 kann in anderen Ausführungsformen auch eine Steigung in Richtung der Hinterradachse 5 aufweisen. Die Steigung kann bereits im Fußraum 11 oder erst im Bereich der Öffnung 15 beginnen.

Die Öffnung 15 ist verschließbar. Dazu ist ein Flächenelement 17 an der Sitzeinrichtung 9 oder am Fahrzeugrahmen 1.1 beweglich angeordnet, derart, dass dieses Flächenelement 17 zwischen einer Schließstellung und einer Öffnungsstellung hin und her bewegbar ist. In Fig. 1 befindet sich das Flächenelement 17 in seiner Schließstellung. In Fig. 3 und Fig. 4 befindet sich das Flächenelement 17 jeweils in seiner Öffnungsstellung.

In der in den Figuren dargestellten Ausführungsform ist das Flächenelement 17 an einem vorderen Ende 9.3 der Sitzbank 9.1 angebracht und um eine Achse quer zur Fahrzeuglängsachse schwenkbar. In Fig. 5 ist zu sehen, wie das Flächenelement 17 in seine Öffnungsstellung nach innen und unter die Sitzbank 9.1 geschwenkt ist und in dieser Öffnungsstellung auch durch einen Sitzbankriegel 9.4 festgehalten wird. In anderen Ausführungsformen kann das Flächenelement 17 auch als eine seitlich angelenkte Klappe oder als eine Art Rolltor ausgebildet sein.

Das Flächenelement 17 ist also im geöffneten Zustand im Stauraum 9.2 unter der Sitzbank verstaut, wie das in Fig. 3 dargestellt ist. In diesem Zustand kann Ware auf der sich vom Fußraum 11 in den Stauraum 9.2 erstreckende Nutzfläche 13 abgestellt und transportiert werden.

In der dargestellten Ausführungsform hat die Öffnung 15 ein möglichst großes Öffnungsprofil, sodass Ware von vorne, oder bei geöffneter Sitzbank 9.1 auch von oben, verstautaut werden kann, welche die gesamte Länge zwischen einer vorderen, den Lenkkopf 7.2 des Fahrzeugs 1 anbindenden Geometrie des Fahrzeugrahmens 1.1 und einer Abdeckung des Hinterrades einnehmen kann.

Das Öffnungsprofil der Öffnung 15 hat in der vorliegenden Ausführungsform eine Breite und/oder eine Höhe in einem Bereich von 200mm bis 500mm. Diese Maße umfassen alle gängigen Breiten und/oder Höhen von genormten Flaschenkisten. In anderen Ausführungsformen kann das Öffnungsprofil in seiner Breite und/oder Höhe an die Breite und/oder Höhe einer in dem vorgenannten Größenbereich vorliegenden Flaschenkiste angepasst werden. In der dargestellten Ausführungsform weist die Nutzfläche 13 in Richtung der Fahrzeuglängsachse eine Länge im Bereich von 600mm bis 1000mm aufweist. Eine Länge in diesem Wertebereich entspricht im Wesentlichen einer Länge von zwei Flaschenkisten mit einer Breite und/oder Höhe aus dem oben genannten Wertebereich von 200mm bis 500mm, so dass auf der Nutzfläche 13 zwei Getränkekisten in Richtung der Fahrzeuglängsachse hintereinander positioniert werden können, wobei die eine wenigstens teilweise in dem Stauraum 9.2 positioniert ist und die andere im Fußraum 11.1. Die Füße einer Person können dann neben den Getränkekisten jeweils auf einem der Trittbretter 11.1 abgestellt werden.

In der dargestellten Ausführungsform ist der Stauraum 9.2 seitlich durch eine Verkleidung der Sitzeinrichtung 9 geschlossen. Das Raumprofil entspricht in seiner Höhe und Breite dem Öffnungsprofil. Wenn das Öffnungsprofil veränderbar ist, um an die Größe des Umfangs einer Getränkekiste angepasst zu werden, kann das Raumprofil auch eine größere Weite als das Öffnungsprofil umschließen. Denkbar ist auch, dass auch das Raumprofil an den Umfang einer Getränkekiste angepasst werden kann.

Damit der Stauraum 9.2 ein möglichst großes Volumen aufweisen kann, sind eine Batterie 19 und eine Fahrzeugelektronik 21, unter Berücksichtigung ausreichender Bodenfreiheit, so weit wie möglich nach unten verlagert und liegen in der in Fig. 1 dargestellten Ausführungsform unterhalb der Nutzfläche 13. Oberhalb von Batterie 19 und Fahrzeugelektronik 21 erstreckt sich die Nutzfläche 13 als durchgehende Ebene. In der Nutzfläche 13 ist im Fußraum 11 einen Batteriedeckel 23 für den Zugang zur Batterie 19 ausgebildet. Unterhalb des Stauraums 9.2 ist in der Nutzfläche 13 eine Elektronikabdeckung 25 ausgebildet. Der durch Aufklappen der Sitzbank 9.1 zugängliche Stauraum 9.2 ist nach Entfernung der Elektronikabdeckung 25 die Fahrzeugelektronik 21 für Wartungszwecke zugänglich.

Die Batterie 19 und die Fahrzeugelektronik 21 können auf einer gemeinsamen, vormontierbaren Elektronikplatte montiert sein. Das Flächenelement 17 kann durch eine erste Verriegelungseinrichtung 25 innerhalb des Stauraumes 9.2 verriegelt werden, sodass bei verschlossener Sitzbank 9.1 (Sitzbank 9.1 in Schließstellung), das Flächenelement 17 nicht von außen geöffnet werden kann. Ein verriegeln der Batteriedeckel 23 erfolgt durch eine zweite Verriegelungseinrichtung 26, die nach einem Öffnen der Sitzbank 9.1 (Sitzbank 9.1 in Öffnungsstellung) zugänglich ist.

Damit das geöffnete Flächenelement 17 das Einsetzen der Ware von oben nicht behindert, wird es vorzugsweise unten oberhalb der Elektronikabdeckung 25 (Fig. 3), seitlich innerhalb der Seitenwände des Stauraumes 9.2 Sitzbankfaches oder klappbar an der Sitzbank 9.1 befestigt. Das Flächenelement 17 kann auch als entfernbares, loses Teil ausgeführt sein. In den Ausführungsformen, in denen das Flächenelement 17 mitbeweglich an der Sitzbank 9.1 befestigt ist (Figs. 5 und 6), wird das Flächenelement 17 von dem Sitzbankriegel 9.4 an der Sitzbank 9.1 gehalten, wenn sich diese in einer den Stauraum 9.2 öffnenden Lage befindet.

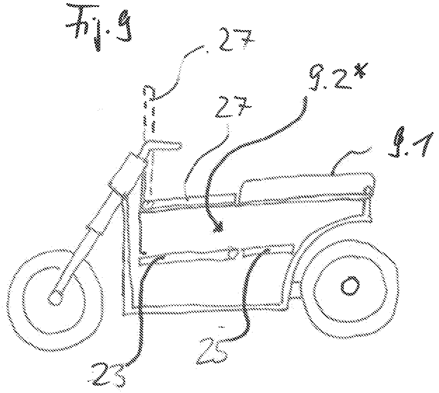

In Fig. 9 ist eine zweite Ausführungsform der Gesamtstruktur des Fahrzeugs 1 schematisch dargestellt. In dieser zweiten Ausführungsform ist, um einen größeren verschließbaren Stauraum 9.2 zu erhalten, der Stauraum 9.2* nach vorne in den Fußraum 11 erweitert und übergreift einen Bereich des Batteriedeckels 23. Diese Erweiterung kann sich bis zum vorderen Teil des Fahrzeugrahmens 1.1 ausdehnen. Ein vordere Bereich 9.5*, der in Fahrtrichtung vor der Sitzbank 9.1 liegt, weist einen separaten Zugangsdeckel 27 auf.

Nach dem Öffnen des großen Zugangsdeckels 27 und der Sitzbank 9.1 ist ein sehr großer Stauraum 9.2* zugänglich.

Das Erweitern des verschließbaren Stauraums gemäß der zweiten Ausführungsform hat den Nachteil, dass oberhalb des Batteriedeckels 23 im Fußraum 11 des Fahrzeugs 1 keine sperrigen Gegenstände quer transportiert werden können. Die Erweiterung des Stauraums 9.2 zu dem sehr großen Stauraum 9* nach vorn in den Fußraum 11 hinein kann auch als abnehmbares separates Element ausgeführt sein, das bei Bedarf entfernt werden kann.

### Bezugszeichenliste

- 1: Fahrzeug
- 3: Vorderachse
- 3.1: Vorderrad
- 5: Hinterachse
- 5.1: Hinterrad
- 7: Lenkeinrichtung
- 7.1: Lenker
- 7.2: Lenkkopf
- 9: Sitzeinrichtung
- 9.1: Sitzbank
- 9.2: Stauraum
- 9.2*: erweiterter Stauraum
- 9.3: vorderes Ende der Sitzbank 9.1
- 9.4: Sitzbankriegel
- 9.5*: vorderer Bereich
- 11: Fußraum
- 11.1: Trittbrett
- 13: Nutzfläche
- 15: Öffnung
- 17: Flächenelement
- 19: Batterie
- 21: Fahrzeugelektronik
- 23: Batteriedeckel
- 25: Elektronikabdeckung
- 26: Verriegelungseinrichtung
- 27: Zugangsdeckel

## Patentansprüche

1. Fahrzeug (1) auf der Grundlage eines ein rollerartiges Fahrzeug betreffenden Fahrzeugkonzepts mit oder ohne Spurweite, mit einer Fahrzeuglängsachse, einem Fahrzeugrahmen (1.1), einem Fußraum (11), der für Füße und Beine zugänglich ist, und einem Stauraum (9.2) zum Verstauen von Waren unter einer Sitzeinrichtung (9), wobei der Fußraum (11) eine Nutzfläche (13) aufweist, wobei sich die Nutzfläche (13) unter die Sitzeinrichtung (9) erstreckt und den Stauraum (9.2) unter der Sitzeinrichtung (9) bodenseitig begrenzt,**dadurch gekennzeichnet, dass** der Fußraum (11) mit dem Stauraum (9.2) über eine Öffnung (15) verbunden ist, die ein vorbestimmtes Öffnungsprofil aufweist, derart, dass Ware von vorne im Stauraum (9.2) verstaut werden kann, welche die gesamte Länge zwischen einer vorderen, einer einen Lenkkopf (7.2) des Fahrzeugs (1) anbindenden Geometrie des Fahrzeugrahmens (1.1) und einer Abdeckung des Hinterrades einnehmen kann.

2. Fahrzeug nach Anspruch 1,
**dadurch gekennzeichnet,**
**dass** die Öffnung (15) mit einem Flächenelement (17) verschließbar ist.

3. Fahrzeug nach Anspruch 2,
**dadurch gekennzeichnet,**
**dass** das Flächenelement (17) an dem Fahrzeugrahmen (1.1) oder an der Sitzeinrichtung (9) zwischen einer Öffnungsstellung und einer Schließstellung in beiden Richtungen verschiebbar oder schwenkbar angebracht ist.

4. Fahrzeug nach einem der vorstehenden Ansprüche,
**dadurch gekennzeichnet,**
**dass** das Öffnungsprofil der Öffnung (15) eine Höhe in einem Bereich von 200mm bis 500mm aufweist.

5. Fahrzeug nach einem der vorstehenden Ansprüche,
**dadurch gekennzeichnet,**
**dass** das Öffnungsprofil der Öffnung (15) eine Breite in einem Bereich von 200mm bis 500mm aufweist.

6. Fahrzeug nach einem der vorstehenden Ansprüche,
**dadurch gekennzeichnet,**
**dass** die Nutzfläche (13) in Richtung der Fahrzeuglängsachse eine Länge in einem Bereich von 600mm bis 1000mm aufweist.

7. Fahrzeug nach einem der vorstehenden Ansprüche,
**dadurch gekennzeichnet,**
**dass** der Stauraum (9.2) ein Raumprofil aufweist, dass dem Öffnungsprofil entspricht.

8. Fahrzeug nach einem der Ansprüche 2 bis 7,
**dadurch gekennzeichnet,**
**dass** das Flächenelement (17) ein Element ausgewählt aus der Gruppe Schiebetür, Schwenktür, Rolltür oder Klappe ist.

9. Fahrzeug nach einem der vorstehenden Ansprüche,
**dadurch gekennzeichnet,**
**dass** sich die Nutzfläche (13) in einer einzigen horizontalen Ebene erstreckt, derart dass vom Fußraum (11) durch die Öffnung (15) hindurch in den Stauraum (9.2) in einer Ebene durchgeladen werden kann.

10. Fahrzeug nach einem der vorstehenden Ansprüche,
**dadurch gekennzeichnet,**
**dass** die Nutzfläche (13) wenigstens ein Trittbrett (11.1) für Füße umfasst.

11. Fahrzeug nach Anspruch 10,
**dadurch gekennzeichnet,**
**dass** die Nutzfläche (13) wenigstens zwei Trittbretter (11.1) für Füße umfasst, die beidseitig der Fahrzeuglängsachse angeordnet sind.

12. Fahrzeug nach einem der vorstehenden Ansprüche,
**dadurch gekennzeichnet,**
**dass** die Sitzeinrichtung (9) zwei Sitzplätze umfasst, die in Richtung der Fahrzeuglängsachse hintereinander angeordnet sind.

13. Fahrzeug nach einem der vorstehenden Ansprüche,
**dadurch gekennzeichnet,**
**dass** unterhalb der Nutzfläche (13) ein Funktionsraum zur Aufnahme einer Batterie (19) und einer Fahrzeugelektronik (21) ausgebildet ist.

## Claims

1. Vehicle (1) based on a vehicle concept relating to a scooter-like vehicle with or without track width, having a vehicle longitudinal axis, a vehicle frame (1.1), a footwell (11) which is accessible for feet and legs, and a storage space (9.2) for stowing goods under a seating device (9), wherein the footwell (11) comprises a usable area (13), wherein the usable area (13) extends under the seating device (9) and delimits a storage space (9.2) on the floor side under the seating device (9), **characterized in that** the footwell (11) is connected to the storage space (9.2) via an opening (15) which has a predetermined opening profile in such a manner that goods can be stored from the front in the storage space (9.2) which can occupy the entire length between a front geometry of the vehicle frame (1.1) connecting a steering head (7.2) of the vehicle (1) and a cover of the rear wheel.

2. Vehicle according to Claim 1, **characterized in that** the opening (15) can be closed by a surface element (17).

3. Vehicle according to Claim 2, **characterized in that** the surface element (17) is attached to the vehicle frame (1.1) or to the seating device (9) so as to be displaceable or pivotable in both directions between an open position and a closed position.

4. Vehicle according to one of the preceding claims, **characterized in that** the opening profile of the opening (15) has a height in a range of 200 mm to 500 mm.

5. Vehicle according to one of the preceding claims, **characterized in that** the opening profile of the opening (15) has a width in a range of 200 mm to 500 mm.

6. Vehicle according to one of the preceding claims, **characterized in that** the usable area (13) in the direction of the vehicle longitudinal axis has a length in a range of 600 mm to 1,000 mm.

7. Vehicle according to one of the preceding claims, **characterized in that** the storage space (9.2) has a spatial profile that corresponds to the opening profile.

8. Vehicle according to one of Claims 2 to 7, **characterized in that** the surface element (17) is an element selected from the group of sliding door, swing door, rolling door, or flap.

9. Vehicle according to one of the preceding claims, **characterized in that** the usable area (13) extends in a single horizontal plane, such that loading can be carried out from the footwell (11) through the opening (15) into the storage space (9.2) in one plane.

10. Vehicle according to one of the preceding claims, **characterized in that** the usable area (13) comprises at least one running board (11.1) for feet.

11. Vehicle according to Claim 10, **characterized in that** the usable area (13) comprises at least two running boards (11.1) for feet, which are arranged on both sides of the vehicle longitudinal axis.

12. Vehicle according to one of the preceding claims, **characterized in that** the seating device (9) comprises two seats arranged one behind the other in the direction of the vehicle longitudinal axis.

13. Vehicle according to one of the preceding claims, **characterized in that** a functional space for accommodating a battery (19) and vehicle electronics (21) is formed below the usable area (13).

## Revendications

1. Véhicule (1) sur la base d'un concept de véhicule concernant un véhicule de type scooter avec ou sans écartement des roues, avec un axe longitudinal de véhicule, un cadre de véhicule (1.1), un espace pour les pieds (11), qui est accessible pour les pieds et les jambes et un espace de rangement (9.2) pour ranger des marchandises sous un système de siège (9), sachant que l'espace pour les pieds (11) comporte une surface utile (13),
sachant que la surface utile (13) s'étend sous le système de siège (9) et limite l'espace de rangement (9.2) du côté du fond sous le système de siège (9), **caractérisé en ce que**
l'espace pour les pieds (11) est relié à l'espace de rangement (9.2) par une ouverture (15), qui comporte un profil d'ouverture prédéterminé de telle sorte que de la marchandise peut être rangée par l'avant dans l'espace de rangement (9.2), laquelle peut occuper toute la longueur entre une géométrie se rattachant à une tête de direction (7.2) du véhicule (1) du cadre de véhicule (1.1) et une couverture de la roue arrière.

2. Véhicule selon la revendication 1,
**caractérisé en ce que**
l'ouverture (15) peut être fermée avec un élément de surface (17).

3. Véhicule selon la revendication 2,
**caractérisé en ce que**
l'élément de surface (17) est monté pouvant être déplacé et pivoté entre une position d'ouverture et une position de fermeture dans les deux directions sur le cadre de véhicule (1.1) ou sur le système de siège (9).

4. Véhicule selon l'une quelconque des revendications précédentes,
**caractérisé en ce que**
le profil d'ouverture de l'ouverture (15) comporte une hauteur se situant dans une plage de 200 mm à 500 mm.

5. Véhicule selon l'une quelconque des revendications précédentes,
**caractérisé en ce que**
le profil d'ouverture de l'ouverture (15) comporte une largeur se situant dans une plage de 200 mm à 500 mm.

6. Véhicule selon l'une quelconque des revendications précédentes,
**caractérisé en ce que**
la surface utile (13) comporte dans le sens de l'axe longitudinal du véhicule une longueur se situant dans une plage de 600 mm à 1000 mm.

7. Véhicule selon l'une quelconque des revendications précédentes,
**caractérisé en ce que**
l'espace de rangement (9.2) comporte un profil d'espace, qui correspond au profil d'ouverture.

8. Véhicule selon l'une quelconque des revendications 2 à 7,
**caractérisé en ce que**
l'élément de surface (17) est un élément choisi à partir du groupe : porte coulissante, porte pivotante, porte roulante ou hayon.

9. Véhicule selon l'une quelconque des revendications précédentes,
**caractérisé en ce que**
la surface utile (13) s'étend dans un plan horizontal unique de telle manière que l'on peut charger à travers l'ouverture (15) dans un plan dans l'espace de rangement (9.2) depuis l'espace pour les pieds (11).

10. Véhicule selon l'une quelconque des revendications précédentes,
**caractérisé en ce que**
la surface utile (13) comprend au moins un marchepied (11.1) pour les pieds.

11. Véhicule selon la revendication 10,
**caractérisé en ce que**
la surface utile (13) comprend au moins deux marchepieds (11.1) pour les pieds, qui sont disposés des deux côtés de l'axe longitudinal de véhicule.

12. Véhicule selon l'une quelconque des revendications précédentes,
**caractérisé en ce que**
le système de siège (9) comprend deux places assises, qui sont disposées l'une derrière l'autre dans le sens de l'axe longitudinal de véhicule.

13. Véhicule selon l'une quelconque des revendications précédentes,
**caractérisé en ce qu'**
un espace fonctionnel pour loger une batterie (19) et un système électronique de véhicule (21) est constitué sous la surface utile (13).
